# EUROPEAN PATENT SPECIFICATION

(11) **EP 4 194 207 B1**
(45) Date of publication and mention of the grant of the patent: **18.11.2026**
(21) Application number: 22212013.1
(22) Date of filing: 07.12.2022
(51) Int. Cl.: B32B 37/14, B32B 27/10, B32B 29/00, B65B 9/20

(54) **METHOD FOR PRODUCING PACKAGING MATERIAL LAMINATE AND PACKAGING CONTAINER**
VERFAHREN ZUR HERSTELLUNG EINES VERPACKUNGSMATERIALLAMINATS UND VERPACKUNGSBEHÄLTER
PROCÉDÉ DE PRODUCTION D'UN STRATIFIÉ DE MATÉRIAU D'EMBALLAGE ET RÉCIPIENT D'EMBALLAGE

(30) Priority: 07.12.2021 EP 21212908
(43) Date of publication of application: 14.06.2023
(73) Proprietor: Tetra Laval Holdings & Finance S.A., 1009 Pully (CH)
(72) Inventor: TOFT, Nils, 221 86 Lund (SE); HORVATH, Andrew, 221 86 Lund (SE)
(74) Representative: Tetra Pak Patent Attorneys

(56) References cited:
- US-A1- 2018 311 940
- US-B2- 10 994 525

## Description

### Technical Field

The invention relates to a method for manufacturing a laminated packaging material. Furthermore, the invention relates to a packaging container made at least partly by a laminated packaging material produced by the method. In particular, the invention relates to packaging containers intended for liquid food packaging, comprising the laminated packaging material.

### Background Art

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk layer of paper or paperboard and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional barrier layer, most commonly an aluminium foil arranged inside the bulk layer.

On the inside of the laminate, i.e. the side intended to face the filled food contents of a container produced from the laminate, there is thus an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill, and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedal or cuboid, by fold formation along prepared crease lines in the packaging material.

The main advantage of this continuous tube-forming, filling and sealing packaging method concept is that the web may be sterilized continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. Optionally the open end of the tubular container capsule can be closed off by molding a plastic top to the packaging material. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

Commercial examples of the above-described laminated packaging material typically includes 75% paperboard, 20% polymer material, and 5% aluminium. This means that packaging containers made from such packaging material are recyclable; the paperboard is recycled into paper products and the 25% remaining fraction (i.e. the polymers and the aluminium) can be recycled into panel boards, roof sheets, etc. Modern recycling plants provide a separation of the paper from the polymers and aluminium via a hydra pulping process, before being converted to new and useful products.

So far, laminated packaging material are produced using virgin paperboard, i.e. with less to no amount of recycled material. In order to align with the current trends of circular manufacturing, there is a desire to make use of paperboard fibers from previous packaging containers when producing the packaging material for new packaging containers. However, with existing production equipment it is not possible to replace the virgin paperboard with recycled paperboard, as there is no control of possible contaminants in the recycled paperboard.

Especially, recycled paperboard may comprise both mineral oil saturated hydrocarbons and mineral oil aromatic hydrocarbons. These contaminants may e.g. be residues from the printing ink used for the décor of old printed papers and packages to be recycled and for food safety reasons it is important that no such contaminants are allowed to escape into the packaged product.

Available equipment and procedures thus prevent the use of recycled fibers in packaging material and there is consequently a need for improvements within this area.

Patent publication No.US10994525B2 describes, in combination with alternative, more cost effective bulk layers, how a bending stiff laminated liquid carton material may be manufactured by means of wet lamination of paper or cellulose-based material webs. It describes how a paper facing layer, may be laminated to the outside of a bulk layer, to create a sandwich together with a similar facing layer on the inside of the bulk layer, and to achieve sufficient bending stiffness, at the same time as offering greater differentiation opportunities to the outside appearance of such a laminate material, including different colours and background effects to a printed décor layer.

Patent publication No. US2018/0311940A1 describes similar laminated materials to US10994525B2, however focussing on the nature of a barrier-coated paper substrate for lamination to the inside of a bulk layer, to obtain i.a. improved oxygen barrier properties.

### Summary

It is an object of the invention to overcome at least partly one or more of the above-identified limitations of the prior art. In particular, it is an object to provide a packaging material laminate comprising recycled material and which can be used for liquid food packaging without any risk for unhealthy contamination of the product enclosed by the packaging material laminate.

To solve this problem, a method for producing a laminated packaging material is provided, according to a first aspect of the claimed invention as defined in claim 1.

By stating that the first migration barrier layer or coating is "homogeneous" is meant that it is a uniform and continuous layer or coating. This means that it has a uniform composition throughout its thickness in the out-of-plane direction, as well as throughout its in-the-plane extension. Furthermore, being a coating or a layer in a laminate, it is continuously covering the layer(s) that it is adjacent to or coated onto, throughout its in-the-plane extension in the laminate. By the term "solid" is meant that the material is in a dry and final state, i.e. not applied in the form of, or containing, a melt or dispersion or solution that needs to solidify or dry or crosslink etc.

Providing the solid outside module comprises the further step of applying the first migration barrier layer or coating to form a homogeneous layer onto the secondary support layer. This allows the outside module to be pre-manufactured under controlled conditions, ensuring that the first migration barrier layer or coating is effectively preventing migration of mineral oil contaminants.

Applying the migration barrier layer or coating is performed by aqueous dispersion coating and subsequent evaporation drying, such as by hot air or convection heating. This has proven to be a very effective process for ensuring a homogenous and solid migration barrier layer or coating, which also allows the use of commercially available migration barrier layer or coating materials, such as PVOH.

The method further comprises providing the inside module comprising a gas barrier layer or coating. Hence, the inside module may be pre-manufactured with a gas barrier which further ensures packaging container integrity and food safety.

The gas barrier layer or coating is a second, homogenous migration barrier layer or coating configured to preventing migration of mineral oil contaminants. Hence it is possible to design the inside module with a specific layer or coating both preventing migration of mineral oil contaminants and providing a gas barrier, which improves designer freedom and packaging material compactness.

The non-virgin material may be made of up to 100 mass% from recycled material, the balance, i.e. the remainder, or rest, of the material being non-recycled material. Hence various grades of recycled material can be used, as the migration barrier layer or coating will effectively prevent migration of mineral oil contaminants also for 100% recycled material.

Laminating the outside module to the core module is performed such that the migration barrier layer or coating is arranged between the primary bulk layer and the secondary support layer. Hence, any mineral oil contaminants in the primary bulk layer are thus prevented from migrating away from the core module and reaching the secondary support layer and are thus effectively contained in the core module and the primary bulk layer.

The secondary support layer may be made of a virgin material. For this embodiment the provision of the outside module will effectively "seal" the outside of the core module thereby preventing any migration of mineral oil contaminants to the outside of the packaging material.

Providing the solid outside module may be performed by applying the barrier layer or coating on only one, or both sides of the secondary support layer. This allows for design freedom of the packaging material and the converting processes to form the packaging material. It also allows for use of different materials for the migration barrier layers or coatings, e.g. by using PVOH on the inside of the secondary support layer and a different migration barrier coating, on the outside of the secondary support layer.

The method may further comprise providing the solid inside module comprising a third support layer of paper or paperboard or other cellulose-based material, and a migration barrier layer or coating configured to prevent migration of mineral oil contaminants on at least one side of the third support layer. This provides further advantages, especially if the primary bulk layer is made of recycled material, as the migration barrier layer or coating will prevent migration of mineral oil contaminants from the primary bulk layer to the inside of the packaging material.

Providing the solid inside module may comprise the further step of applying the migration barrier layer or coating to form a homogeneous layer onto the third support layer. This allows the inside module to be pre-manufactured under controlled conditions, ensuring that the migration barrier layer or coating is effectively preventing migration of mineral oil contaminants.

Applying the migration barrier layer or coating may be performed directly on the third support layer or on an intermediate polymer film substrate. Preferably, applying the migration barrier layer or coating is performed by aqueous dispersion or solution coating and subsequent drying. This provides great flexibility in choosing the manufacturing method and materials of the inside module.

Laminating the inside module to the core module may be performed such that the migration barrier layer or coating is arranged between the third support layer and the primary bulk layer. Hence, any mineral oil contaminants in the primary bulk layer are effectively prevented from migrating and reaching the third support layer and are effectively contained in the core module and the primary bulk layer.

The migration barrier layer or coating may comprise one or more materials from the following group: ethylene vinyl-alcohol copolymers (EVOH), polyethylene vinyl-alcohol copolymers (PVOH), nanocrystalline cellulose (NCC) and microfibrillated cellulose (MFC). Such migration barrier materials are more preferred as being more sustainable to the environment by being either of non-fossil origin and/or being readily re-dispersible in the aqueous recycling fluid used for recycling of waste-paper and carton materials, such as in the fibre recycling stream for used beverage cartons. By applying such migration barrier materials in the form of aqueous dispersion and subsequent drying, very thin coatings with low amounts of dry, solid material may be applied. For this type of coatings, the EVOH materials are thus water dispersible and very similar to PVOH, i.e. having a high content of vinyl alcohol monomers in the polymer.

The method may further comprise providing at least one structural weakening comprising a hole or slit extending at least through the primary bulk layer. This is advantageous in that the packaging material can be provided with easy-to-penetrate opening structures, e.g. straw holes etc.

Laminating the outside module and the inside module to the core module may be performed by extrusion lamination or wet lamination. This allows the use of available, highly efficient processes and equipment. Wet, cold lamination, preferably by an aqueous adhesive composition, without forced drying, is an advantageous and sustainable method from environmental point of view. There is no or substantially less drying energy required, and significantly less adhesive or bonding material is needed. A very low amount of polymer binder can be used, such as less than 5 g/m². The substance used for wet lamination may be of the same kind as substances used in coatings for mineral oil contaminant migration barriers, e.g. PVOH or EVOH polymers. As they are added in lamination as wet solutions to be dried after lamination, they will not be solid barrier layers and less useful. However, they may further contribute to an increased migration barrier capability.

A laminated packaging material is thus produced by the method according to the first aspect.

According to a second aspect of the claimed invention as defined in claim 12, a packaging container, made at least partly by a laminated packaging material produced by the method according to the first aspect, is provided.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a schematic side view of a machine for producing packaging containers for liquid food products from a laminated packaging material according to an embodiment;
Fig. 2 is a cross-sectional view of a laminated packaging material according to an embodiment;
Figs. 3a-b are schematic views of a converting process for semi-producing a laminated packaging material according to an embodiment;
Fig. 4 is a schematic view of a converting process for producing a laminated packaging material;
Figs. 5a is a cross-sectional view of a laminated packaging material according to an embodiment;
Fig. 6 is a cross-sectional view of a laminated packaging material being provided with opening structures according to various embodiments; and
Fig. 7 is a schematic view of a method for producing a laminated packaging material according to an embodiment.

### Detailed Description

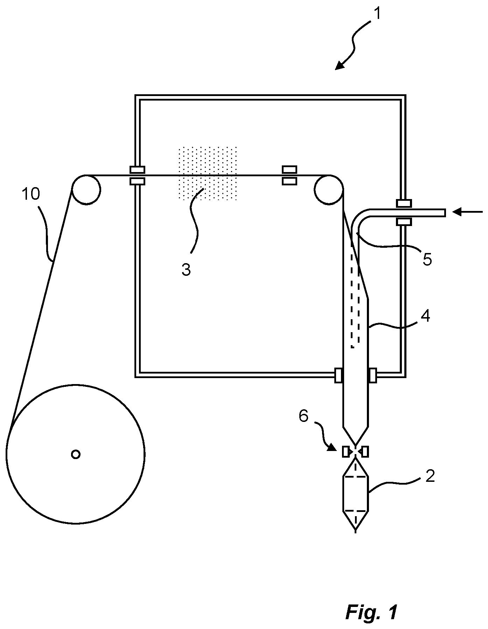

Starting in Fig. 1 an example of a machine 1 for producing packaging containers 2 from a laminated packaging material 10 is shown. In accordance with the description in the background section, the machine 1 comprises a sterilization section 3 configured to sterilize the laminated packaging material 10 normally being roll-fed into the machine 1. Downstream the sterilization section there is a tube-forming section 4 which seals the longitudinal ends of the laminated packaging material 10 to each other. A filling section 5 is configured to fill the longitudinal tube with the desired content, and a transversal sealing section 6 provides transversal seals and cuts to separate the packaging container 2 from the upstream tube of laminated packaging material 10.

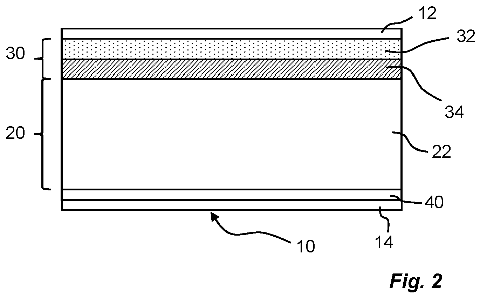

An example of a laminated packaging material 10 for use with e.g. the machine 1 shown in Fig. 1 is described with reference to Fig. 2. The laminated packaging material 10 comprises a core module 20, an outside module 30 intended to face the exterior of a packaging container 2 formed by the packaging material 10, and an inside module 40 intended to face the interior of a packaging container 2 formed by the packaging material 10. The core module 20 is laminated to the outside module 30 and to the inside module 40 such that the core module 20 is arranged in between the outside module 30 and the inside module 40.

Common for all embodiments described herein, the core module 20 comprises a primary bulk layer 22 of paper or paperboard or other cellulose-based material, and the outside module 30, being solid when being laminated to the core layer 20, comprises a secondary support layer 32 of paper or paperboard or other cellulose-based material, as well as at least one first, homogenous and solid migration barrier layer or coating 34 configured to preventing migration of mineral oil contaminants. At least the primary bulk layer 22 of the core module 20 is made of a non-virgin material, i.e. it is made of a material comprising recycled fibers.

In order to form the ready-to-use laminated packaging material 10 an inside module 40 is also laminated to the core module 20 such that the core module 20 is arranged between the outside module 30 and the inside module 40. As is further shown in Fig. 2 the laminated packaging material 10 is further provided with an outermost layer 12 arranged on the outside module 30 to form the exterior layer of the laminated packaging material 10, and an innermost layer or layer portion 14 arranged on the inside module 40 to form the interior layer(s) of the laminated packaging material 10.

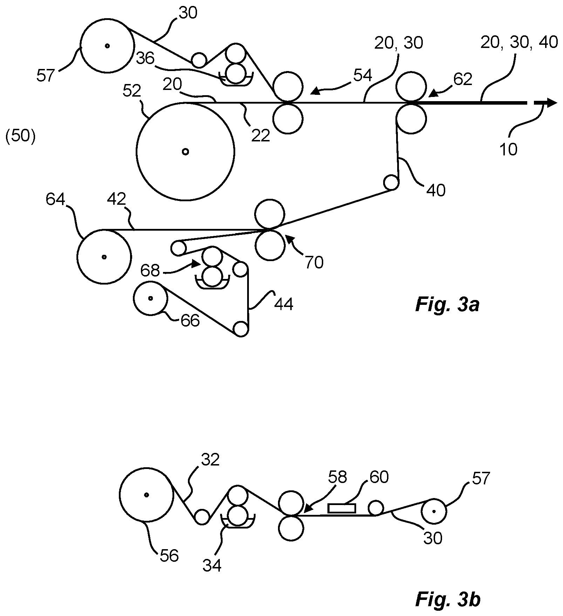

The general idea of forming the laminated packaging material 10 from different pre-manufactured modules 20, 30, 40 provides great flexibility in the design and exact configuration of the final laminated packaging material 10. Especially, the provision of the migration barrier layer or coating 34 in the outside module 30 allows at least the primary bulk layer 22 to be made of recycled material. As a consequence, in case the second support layer 32 is made of virgin material the total amount of virgin material can be decreased as the layer 22 of non-virgin material will still provide some of the required stability of the laminated packaging material 10. This also applies to the converting process, i.e. the various processes involved for forming the laminated packaging material 10. Furthermore, coating operations in the paper manufacturing process may not be necessary, such that the recycled paper or paperboard may be directly delivered as produced i.e. wound onto a paper reel without the need for encapsulating the primary bulk layer 22 with coatings on each side. This is a great advantage for paper manufacturers and suppliers, to be able to deliver a core layer having recycled fibre content directly to a converter, not having to coat the core layer further and guarantee sufficient migration barrier properties to converter customers, thus enabling lower production costs and pricing towards their converter clients. Now turning to Figs. 3a and b an example process is schematically illustrated. The process is performed by one or more associated equipment 50 with the aim of providing an at least semi-finished laminated packaging material from various input materials. In the shown example, the resulting product is a laminated material comprising a core module 20, an outside module 30, and an inside module 40. It should be noted that the process is shown only as an example, and that various modifications and variations are possible.

A continuous web of paper or paperboard or other cellulose-based material is provided on a reel 52. In operation the web of a primary bulk layer 22, i.e. the core module 20, is unreeled and fed through a nip 54. The nip 54 is also receiving the outside module 30. The outside module 30 is already formed when being laminated to the core module 20, e.g. by a separate dispersion process as depicted in Fig. 3b.

As shown in Fig. 3b, in order to prepare the first outside module 30 a continuous web of paper or paperboard or other cellulose-based material is provided on a reel 56. In operation the web is unreeled and fed forward as the secondary support layer 32 of the outside module 30. The barrier film, layer, or coating 34 is for example provided as an aqueous dispersion which is applied to one side of the secondary support layer 32. Optionally, a nip 58 is passed to ensure a homogenous distribution of the barrier layer or coating material. Application of the aqueous dispersion of the barrier layer or coating 34 material may be made by spraying, dipping, or e.g. by roll application as indicated in Fig. 3b.

A dryer 60 may be provided downstream the nip 58 in order to solidify and evaporate the suspension liquid, usually water, thus forming the solid barrier layer or coating 34. Hence, downstream the dryer 60 the outside module 30 is a solid and pre-manufactured outside module 30. After manufacturing of the outside module 30 it may be winded on a storage reel 57 for further transport to the site where the outside module 30 is to be laminated to the core module 20, as illustrated in Fig. 3a.

In order to laminate the outside module 30 to the core module 20 an adhesive may be used. In Fig. 3a this is illustrated as a step of so-called wet lamination, i.e. a liquid, preferably aqueous, adhesive 36 is applied to one side of the outside module 30, i.e. the side intended to face the core module 20 at the nip 54. As can be further seen in Fig. 3a, the outside module 30 is fed to the manufacturing equipment in the form of the reel 57, i.e. the output product from the process shown in Fig. 3b. For the purpose of efficient lamination of the outside module 30 to the core module 20 the joining nip 54 may be a heated nip 54 for faster bonding of the liquid adhesive to adhere properly to the surfaces of the respective modules.

The inside module 40 is laminated to the core module 20 by means of a further nip 62, which may be arranged downstream the nip 54 used for laminating the outside module 30 to the core module 20. The different sequence of lamination operations and nips 62 and 54 is alternatively possible. Various configurations of the inside module 40 are possible, and in Fig. 3a production of one specific embodiment is shown.

In order to prepare the inside module 40 according to the specific embodiment of Fig. 3a a continuous web of paper or paperboard or other cellulose-based material is provided on a reel 64. In operation the web is unreeled and fed forward as a third support layer 42 of the inside module 40. A barrier layer or coating 44 may for example be provided as a pre-manufactured film which is applied to one side of the third support layer 42 by means of wet lamination.

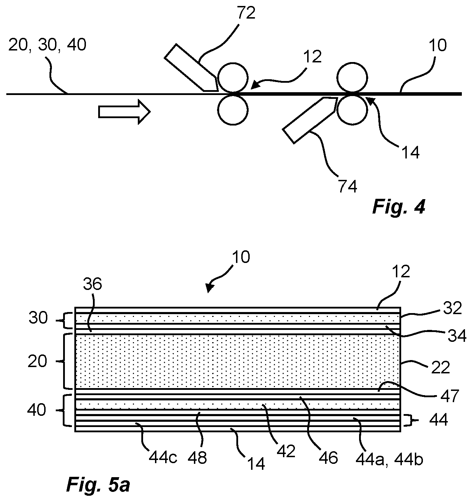

The pre-manufactured film comprising the barrier layer or coating 44 may e.g. be provided as a continuous and pre-manufactured web provided on a reel 66, being fed towards the transport path of the third support layer 42. While various options are possible, the pre-manufactured film or substrate may e.g. be provided as a polymer film substrate or as a paper or cellulose-based sheet substrate 44 being coated with a gas barrier layer or coating by means of vapor deposition coating. In addition, the barrier layer or sheet 44 with a gas barrier coating may comprise a coating of a substance capable of preventing migration of mineral oil contaminants (see Figs. 5a-b) and it may be provided in a similar manner as described above with reference to the barrier layer or coating 34 of the outside module 30.

In Fig. 3a a wet lamination device 68 applies a liquid, preferably aqueous, adhesive to one side of the pre-manufactured film comprising the barrier layer or coating 44, i.e. to the side intended to face the third support layer 42 before the pre-manufactured film comprising the barrier layer or coating 44 meet the third support layer 42 at a nip 70. Alternatively, the lamination of the pre-manufactured film comprising the barrier layer or coating 44 to the third support layer 42 may be performed using an extrusion device (not shown), which is configured to provide a molten film or "curtain" of polymer to a lamination toller nip, in which at least one of the third support layer 42 and the barrier-coated film or sheet substrate 44 are joined and laminated to each other, preferably at the area of the nip 70, which presses the barrier-coated film or sheet substrate 44 to the third support layer 42 whereby the extruded polymer provides the desired lamination. Once the inside module 40 is pre-manufactured and in a solid state it is laminated to the core module 20 through a nip 62. The lamination operation at nip 62 may in the same way be carried out by wet lamination or extrusion lamination as described in connection to the lamination nips 54 and 70 (not shown). In an alternative embodiment, not shown, the third support layer 42 and/ or the barrier-coated film or sheet substrate 44, may be joined to the core module 20 by wet lamination, as described above.

It should also be mentioned that the inside module 40 may be pre-manufactured in a similar manner as described with reference to the outside module 30 and Fig. 3b.

A process for producing the final laminated packaging material 10 is shown in Fig. 4. The output from the process shown in Fig. 3a, i.e. the laminated material including the core module 20, the outside module 30, and the inside module 40 is provided with the outermost layer 12 and the innermost layer portion 14. These outermost and innermost layers and layer portions 12, 14 may e.g. be provided by means of extrusion coating, illustrated in Fig. 4 as extrusion devices 72, 74 arranged in series and acting on opposite sides of the laminated packaging material, i.e. at the outside module 30 and the inside module 40, respectively. It should be mentioned that in particular the innermost layer portion 14 could be provided as a plurality of coextruded polymer layers arranged onto each other as is well-known in the art.

Now turning to Figs. 5a-b different embodiments of a laminated packaging material 10 will be described in further detail. All embodiments have at least a primary bulk layer 22 and a secondary support layer 32 of paper or paperboard or other cellulose-based material. At least the bulk layer 22 is made of a non-virgin material, i.e. it comprises recycled fibers at least to some extent. Further, the primary bulk layer 22 is forming part of a core module 20 and the secondary support layer 32 is forming part of a solid outside module 30, wherein the outside module 30 further comprises a first, homogenous and solid barrier layer or coating 34 configured to prevent the migration of mineral oil contaminants.

In Fig. 5a the laminated packaging material 10 comprises a core module 20 having a primary bulk layer 22 being made of a non-virgin cellulose-based material, i.e. of a material comprising recycled fibers. The outside module 30 is formed by the secondary support layer 32 which for this embodiment is made of an entirely virgin cellulose-based material, i.e. of a material comprising no recycled fibers. A first, homogenous and solid migration barrier layer or coating 34 for preventing migration of mineral oil contaminants is provided on the side of the secondary support layer 32 intended to face the primary bulk layer 22. The solid outside module 40 is thus formed by the secondary support layer 32 and the migration barrier layer or coating 34.

As is clearly shown in Fig. 5a the barrier layer or coating 34 is a distinct layer, and separated from the core module 20 by means of a bonding layer 36, i.e. the adhesive also referred to in Fig. 3a. Contrary to the barrier layer or coating 34 the bonding layer 36 is not made into a solid coating layer, by drying into an intact surface layer, before penetrating and being absorbed into the cellulose fibers of the cellulose-based material layers.

The inside module 40 comprises a third support layer 42 which for this embodiment is made of an entirely virgin cellulose-based material, i.e. of a material comprising no recycled fibers. The inside module 40 further comprises a pre-manufactured film or sheet 44 comprising a polymer film substrate 44a or a cellulose-based sheet substrate 44b, said substrates 44b being coated with a gas barrier layer or coating 44c. A second, homogenous and solid migration barrier coating 46 for preventing migration of mineral oil contaminants may also be provided on one side of the third support layer 42, e.g. the side intended to face the primary bulk layer 22.

Alternatively, the barrier coating 46 for preventing migration of mineral oil contaminants may form part of the pre-manufactured film or sheet 44. The configuration of the pre-manufactured film or sheet 44, as seen from either inside to outside or outside to inside, may be any one of the following: i) barrier coating 46 - gas barrier layer or coating 44c - polymer film substrate 44a or cellulose-based sheet substrate 44b, ii) gas barrier layer or coating 44c - barrier coating 46 - polymer film substrate 44a or cellulose-based sheet substrate 44b, iii) barrier coating 46 -polymer film substrate 44a or cellulose-based sheet substrate 44b - gas barrier layer or coating 44c (as shown in Fig. 5a).

The barrier coating 46 and the pre-manufactured film or sheet 44 are distinct layers and separated from the core module 20 by means of a bonding layer 47, e.g. an adhesive, and from the third support layer 42 by means of another bonding layer 48, e.g. also some type of adhesive. Contrary to the barrier coating 46 and the pre-manufactured film or sheet 44 the bonding layers 47, 48 are not made into solid coating layers, by drying into an intact surface layer, before penetrating and being absorbed into the cellulose fibers of the cellulose-based material layers.

It should be mentioned that the above embodiments described with reference to the appended drawings can be modified or combined in order to provide different configurations not explicitly described herein.

One specific object is to allow the use of recycled material, and to ensure that any use of such non-virgin material is made while reducing the risk for mineral oil contaminants to spread out from the laminated packaging material. Different materials for the barrier layer or coatings 34, 46 may be considered. The inventors have realized that there is a list of materials that have proven particularly useful for being environmentally sustainable materials as well as capable of preventing migration of mineral oil contaminants i.e. mineral oil saturated hydrocarbons and mineral oil aromatic hydrocarbons. Such useful materials include ethylene vinyl-alcohol copolymers (EVOH), polyethylene vinyl-alcohol copolymers (PVOH), nanocrystalline cellulose (NCC) and microfibrillated cellulose (MFC).

Suitable materials for preventing oxygen and/or water vapor transmission may be applied by vapor deposition coating, such as by physical vapor deposition, PVD, or chemical vapor deposition, CVD, especially plasma enhanced chemical vapor deposition, PECVD. Examples of such vapor deposited barrier coatings in the nanometer thickness range may be metallization coatings, such as metallized aluminium, metal oxide coatings, such as AlOx or SiOx, or coatings of amorphous carbon, i.e. amorphous diamond-like carbon coatings, DLC.

Other suitable materials for preventing oxygen and/or water vapor transmission may be applied by means of aqueous dispersion or solution coating of barrier polymers or barrier compositions of a polymer binder and inorganic particles or fillers. In some cases, polymers and compositions that are suitable for preventing oxygen transmission are also suitable for preventing migration of mineral oil contaminants.

The embodiments described above requiring a plurality of barrier layers or coatings 34, 44, 46 may use a single barrier material only, or different barrier materials may be used for the different barrier layers or coatings 34, 44, 46. For example, the outside module 30 may have two barrier layers or coatings 34a-b arranged on both sides of the secondary support layer 32. The barrier layer or coating 34a facing the exterior of the laminated packaging material 10 may e.g. be a PVOH layer which is optionally further metallized for also enhancing the visual appearance of the laminated packaging material 10 while the other barrier layer or coating 34b may be a homogenous layer of solid PVOH alone. The PVOH coating may be applied as two thin coatings applied onto each other, with subsequent drying after each coating step, to provide best possible barrier performance at low grammage of the dry solid content, and a most efficient coating/drying efficiency in production.

Especially, with regards to the embodiments of Figs. 5a there is a possibility to combine the gas barrier layer or coating 44 and the migration barrier layer 46 into a single layer. Such dual-function gas barrier layer or coating 44, 46 would most preferably be on the inside of the third support layer 42, i.e. on the side towards the inside of a packaging container, especially if there is some recycled fiber content in also in the third support layer. If the third support layer 42 is replaced by a polymer film substrate the dual-function gas barrier layer or coating 44, 46 could be arranged on any side of the polymer film substrate. Thus, if the inside module 40 has no paper substrate, but a pre-made and gas barrier coated polymer film, the gas barrier layer or coating may also act as migration barrier.

From above it is thus clear that the inside module 40 does not necessarily need to comprise the third support layer 42 of cellulose-based material, but the inside module 40 may have only the pre-manufactured film or sheet 44 provided with the desired barrier coating(s) 44c, 46, as well as optional additional coatings, layers, or films (but no third support layer 42 of cellulose-based material).

Another significant advantage of providing the laminated packaging material 10 from a core module 20, an outside module 30, and an inside module 40 is that it is possible to assign specific properties of the laminated packaging material 10 to the different modules. In previous packaging materials specific properties such as mechanical properties, oxygen barrier properties, integrity, and appearance are entangled; these properties are all affected by various layers throughout the packaging material. However, for the embodiments described herein at least some of these properties can be assigned to one or two of the modules 20, 30, 40. For example, the appearance will only be dependent on the outside module 30, while the barrier properties will only be dependent on the inside module 40. Hence, outside and inside differentiation is possible by direct replacement of these modules 30, 40 which has not been possible with prior packaging materials. Furthermore, in connection to a core module containing recycled content, it means that the core material needs to be handled in lamination and converting only once in its initial, un-encapsulated state. Once encapsulated between outside and inside modules comprising layers or coatings of migration barrier material, it cannot further contaminate the converting line or the materials involved. In particular, as ready-made, pre-manufactured, outside and inside modules are laminated to the core layer in one run through the converting line, there will be no yet non-covered side of the non-virgin core layer that may come in contact with adjacent, laminated virgin materials on a winded reel, or that may pass further lamination stations in a non-covered state.

Another aspect of laminated packaging materials 10 is the possibility of providing pre-made opening structures for allowing easy use of e.g. straws. Hence, for this purpose such pre-made opening structures may be forming straw holes on the final laminated packaging material 10.

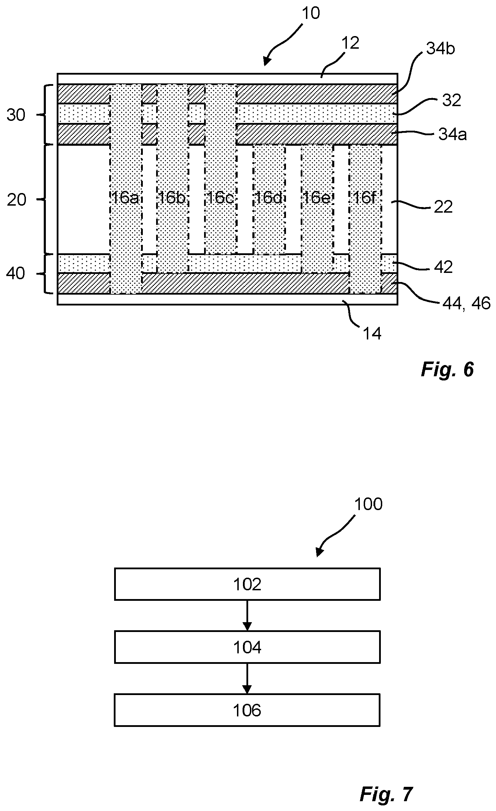

Various examples of such pre-made opening structures are illustrated in Fig. 6, showing a cross-section of a laminated packaging material 10. While the laminated packaging material 10 could be of any type or configuration as described herein, for this particular embodiment the core module 20 comprises a primary bulk layer 22 of virgin material. The outside module 30 comprises a secondary support layer 32 being encapsulated by two opposite barrier layers or coatings 34a-b. The inside module 40 comprises a third support layer 42 and a barrier coating 46. An outermost layer 12 is laminated to the outside module 30, and one or more innermost layers 14 are laminated to the inside module 40.

Various configurations of pre-made opening structures 16 are shown in Fig. 6. Starting to the left in Fig. 6, a pre-made opening structure 16a may be provided as a punched hole or slit extending entirely through the core module 20, the outside module 30, and the inside module 40. The innermost and outermost layers 12, 14 of the packaging material 10 are covering the pre-made opening structure 16a.

The next pre-made opening structure 16b of Fig. 6 is extending entirely through the outside module 30 and the core module 20, but only through the third support layer 42 of the inside module 40 leaving the innermost and outermost layers 12, 14 and the barrier layer or coating 46 to cover the pre-made opening structure 16b.

The pre-made opening structure 16c is extending through the outside module 30 and the core module 20, leaving the innermost and outermost layers 12, 14 and the inside module 40 to cover the pre-made opening structure 16b. This embodiment is advantageous and preferred. Any contaminations of recycled fibers are prevented to reach the enclosed product before the package is opened, and it is thus preferred not only for straw holes, but also for bigger opening structures for caps and similar. The pre-made opening structure 16c thus provides a structure which is reasonably easy to penetrate, since the primary bulk layer 22 is removed, but still prevents contaminants to reach the product enclosed by the package. Furthermore, when the first homogeneous migration barrier layer 34, 34a is positioned as close as possible to the core layer, i.e. between the primary bulk layer 22 and the second support layer 32, there will be allowed as little migration from the non-virgin core layer as possible.

The pre-made opening structure 16d is extending through the core module 20 only, leaving the innermost and outermost layers 12, 14 as well as the inside module 30 and outside module 40 to cover the pre-made opening structure 16d.

The next pre-made opening structure 16e of Fig. 6 is extending entirely through the core module 20, and through the third support layer 42 of the inside module 40 leaving the innermost and outermost layers 12, 14 as well as the outside module 30 and the oxygen barrier 46 to cover the pre-made opening structure 16e.

The last pre-made opening structure 16f of Fig. 6 is extending entirely through the core module 20 and the inside module 40 leaving the innermost and outermost layers 12, 14 as well as the outside module 30to cover the pre-made opening structure 16f.

Now turning to Fig. 7 a method 100 is schematically shown. The method 100 is performed with the aim of producing a laminated packaging material 10 having a core module 20, an inside module 40 intended to face the interior of a packaging container formed by the packaging material 10, and an outside module 30 intended to face the exterior of a packaging container formed by the packaging material 10. The method comprises a first step 102 of providing a core module 20 comprising a primary bulk layer 22 of paper or paperboard or other cellulose-based material, and a step 104 of providing a solid outside module 30. Step 104 is performed such that the outside module 30 comprises a secondary support layer 32 of paper or paperboard or other cellulose-based material, and a first, homogenous migration barrier layer or coating 34 configured to preventing migration of mineral oil contaminants, wherein the migration barrier layer or coating 34 is applied on at least one side of the secondary support layer 32. At least one of the primary bulk layer 22 and the secondary support layer 32 is made of a non-virgin material. The method further comprises a step 106 of laminating the solid outside module 30 and an inside module 40 to the core module 20.

## Claims

1. A method for producing a laminated packaging material (10) having a core module (20), an inside module (40) intended to face the interior of a packaging container (2) formed by the packaging material (10), and an outside module (30) intended to face the exterior of a packaging container (2) formed by the packaging material (10), the method comprising:
providing a core module (20) comprising a primary bulk layer (22) of paper or paperboard or other cellulose-based material, wherein at least the primary bulk layer (22) is made of a non-virgin material,
providing a solid outside module (30) comprising a secondary support layer (32) of paper or paperboard or other cellulose-based material, and a first homogenous migration barrier layer or coating (34) configured to prevent migration of mineral oil contaminants, the providing of a solid outside module (30) including the further step of applying the first migration barrier layer or coating (34) by aqueous dispersion coating and subsequent drying to form a homogeneous, i.e. uniform and continuous, layer on at least one side of the secondary support layer (32),
providing the inside module (40) comprising a gas barrier layer or coating (44c, 46), being a second homogenous migration barrier layer or coating configured to prevent migration of mineral oil contaminants,
and
laminating the solid outside module (30) and the inside module (40) to the core module (20) such that the first migration barrier layer or coating (34) is arranged between the primary bulk layer (22) and the secondary support layer (32).

2. The method according to claim 1, wherein the non-virgin material is made of up to 100 mass% from recycled material, the balance, i.e. the remainder of the material, being non-recycled material.

3. The method according to any of the preceding claims, wherein the primary bulk layer (22) is made of a non-virgin material and wherein the secondary support layer (32) is made of a virgin material.

4. The method according to any of the preceding claims, wherein providing the solid outside module (30) is performed by applying the barrier layer or coating (34) on both sides of the secondary support layer (32).

5. The method according to any of the preceding claims, further comprising providing the solid inside module (40) comprising a third support layer (42) of paper or paperboard or other cellulose-based material, and a second migration barrier layer or coating (46) configured to prevent migration of mineral oil contaminants on at least one side of the third support layer (42).

6. The method according to claim 5, wherein providing the solid inside module (40) comprises the further step of applying the second migration barrier layer or coating (46) to form a homogeneous layer or coating onto the third support layer (42).

7. The method according to claim 5 or 6, wherein applying the second migration barrier layer or coating (46) is performed directly on the third support layer (42) or on an intermediate polymer film substrate (44a-b).

8. The method according to any of claims 5-7, wherein applying the second migration barrier layer or coating (46) is performed by aqueous dispersion or solution coating and subsequent drying.

9. The method according to any of claims 5-8, wherein laminating the inside module (40) to the core module (20) is performed such that the second migration barrier layer or coating (46) is arranged between the third support layer (42) and the primary bulk layer (22).

10. The method according to any of claims 5-9, wherein the first and second migration barrier layers or coatings (34, 44) comprise one or more materials from the following group: ethylene vinyl-alcohol copolymers (EVOH), polyethylene vinyl-alcohol copolymers (PVOH), nanocrystalline cellulose (NCC), and microfibrillated cellulose (MFC).

11. The method according to any of the preceding claims, wherein laminating the outside module (30) and the inside module (40) to the core module (20) is performed by extrusion lamination or wet lamination.

12. A packaging container (2), made at least partly by a laminated packaging material (10) produced by the method according to any of the preceding claims.

## Patentansprüche

1. Verfahren zum Herstellen eines laminierten Verpackungsmaterials (10) mit einem Kernmodul (20), einem Innenmodul (40), das dazu vorgesehen ist, dem Inneren eines durch das Verpackungsmaterial (10) gebildeten Verpackungsbehälters (2) zugewandt zu sein, und einem Außenmodul (30), das dazu vorgesehen ist, dem Äußeren eines durch das Verpackungsmaterial (10) gebildeten Verpackungsbehälters (2) zugewandt zu sein, das Verfahren Folgendes umfassend:
Bereitstellen eines Kernmoduls (20), das eine primäre Volumenschicht (22) aus Papier oder Pappe oder einem anderen Material auf Cellulose-Basis umfasst, wobei mindestens die primäre Volumenschicht (22) nicht aus einem Primarmaterial hergestellt ist,
Bereitstellen eines festen Außenmoduls (30), das eine sekundäre Trägerschicht (32) aus Papier oder Pappe oder einem anderen Material auf Cellulose-Basis umfasst, und eine erste homogene Migrationssperrschicht oder - Beschichtung (34), die dazu ausgelegt ist, eine Migration von Mineralöl-Kontaminanten zu verhindern, wobei das Bereitstellen eines festen Außenmoduls (30) den weiteren Schritt des Aufbringens der ersten Migrationssperrschicht oder -Beschichtung (34) durch wässriges Dispersionsbeschichten und anschließendes Trocknen beinhaltet, um eine homogene, d. h. gleichmäßige und kontinuierliche, Schicht auf mindestens einer Seite der sekundären Trägerschicht (32) zu bilden,
Bereitstellen des Innenmoduls (40), das eine Gassperrschicht oder -Beschichtung (44c, 46) umfasst, die eine zweite homogene Migrationssperrschicht oder - Beschichtung ist, die dazu ausgelegt ist, eine Migration von Mineralöl-Kontaminanten zu verhindern,
und
Laminieren des festen Außenmoduls (30) und des Innenmoduls (40) auf das Kernmodul (20), so dass die erste Migrationssperrschicht oder -Beschichtung (34) zwischen der primären Volumenschicht (22) und der sekundären Trägerschicht (32) angeordnet ist.

2. Verfahren nach Anspruch 1, wobei das Nicht-Primarmaterial aus bis zu 100 Masse-% aus recyceltem Material besteht, wobei der Rest, d. h. das restliche Material, nicht recyceltes Material ist.

3. Verfahren nach einem der vorhergehenden Ansprüche, wobei die primäre Volumenschicht (22) nicht aus einem Primärmaterial hergestellt ist und wobei die sekundäre Trägerschicht (32) aus einem Primärmaterial hergestellt ist.

4. Verfahren nach einem der vorhergehenden Ansprüche, wobei Bereitstellen des festen Außenmoduls (30) durch Aufbringen der Sperrschicht oder -Beschichtung (34) auf beiden Seiten der sekundären Trägerschicht (32) durchgeführt wird.

5. Verfahren nach einem der vorhergehenden Ansprüche, ferner umfassend Bereitstellen des festen Innenmoduls (40), das eine dritte Trägerschicht (42) aus Papier oder Pappe oder einem anderen Material auf Cellulose-Basis und eine zweite Migrationssperrschicht oder -Beschichtung (46) umfasst, die dazu ausgelegt ist, eine Migration von Mineralöl-Kontaminanten auf mindestens einer Seite der dritten Trägerschicht (42) zu verhindern.

6. Verfahren nach Anspruch 5, wobei Bereitstellen des festen Innenmoduls (40) den weiteren Schritt des Aufbringens der zweiten Migrationssperrschicht oder - Beschichtung (46) umfasst, um eine homogene Schicht oder Beschichtung auf der dritten Trägerschicht (42) zu bilden.

7. Verfahren nach Anspruch 5 oder 6, wobei Aufbringen der zweiten Migrationssperrschicht oder -Beschichtung (46) direkt auf der dritten Trägerschicht (42) oder auf einem Polymerfilm-Zwischensubstrat (44a-b) durchgeführt wird.

8. Verfahren nach einem der Ansprüche 5 bis 7, wobei Aufbringen der zweiten Migrationssperrschicht oder - Beschichtung (46) durch wässrige Dispersion oder Lösungsbeschichtung und anschließendes Trocknen durchgeführt wird.

9. Verfahren nach einem der Ansprüche 5 bis 8, wobei Laminieren des Innenmoduls (40) mit dem Kernmodul (20) so durchgeführt wird, dass die zweite Migrationssperrschicht oder -Beschichtung (46) zwischen der dritten Trägerschicht (42) und der primären Volumenschicht (22) angeordnet ist.

10. Verfahren nach einem der Ansprüche 5 bis 9, wobei die erste und die zweite Migrationssperrschicht oder - Beschichtung (34, 44) ein oder mehrere Materialien aus der folgenden Gruppe umfassen: Ethylen-Vinylalkohol-Copolymere (EVOH), Polyethylen-Vinylalkohol-Copolymere (PVOH), nanokristalline Cellulose (NCC) und mikrofibrillierte Cellulose (MFC).

11. Verfahren nach einem der vorhergehenden Ansprüche, wobei Laminieren des Außenmoduls (30) und des Innenmoduls (40) auf das Kernmodul (20) durch Extrusionslaminierung oder Nasslaminierung durchgeführt wird.

12. Verpackungsbehälter (2), der zumindest teilweise durch ein laminiertes Verpackungsmaterial (10) angefertigt wird, das durch das Verfahren nach einem der vorhergehenden Ansprüche hergestellt wird.

## Revendications

1. Procédé de production d'un matériau d'emballage stratifié (10) ayant un module central (20), un module intérieur (40) destiné à être tourné vers l'intérieur d'un récipient d'emballage (2) formé par le matériau d'emballage (10), et un module extérieur (30) destiné à faire face à l'extérieur d'un récipient d'emballage (2) formé par le matériau d'emballage (10), le procédé comprenant :
fournir un module central (20) comprenant une couche de masse primaire (22) de papier ou de carton ou d'un autre matériau à base de cellulose, dans lequel au moins la couche de masse primaire (22) est composée d'un matériau non vierge,
fournir un module extérieur (30) solide comprenant une couche support secondaire (32) de papier ou de carton ou d'un autre matériau à base de cellulose, et une première couche ou un premier revêtement barrière de migration homogène (34) configuré(e) pour empêcher la migration de contaminants d'huile minérale, la fourniture d'un module extérieur (30) solide comprenant l'étape supplémentaire d'application de la première couche ou du premier revêtement barrière de migration (34) par revêtement de dispersion aqueuse et séchage ultérieur pour former une couche homogène, c'est-à-dire uniforme et continue, sur au moins un côté de la couche support secondaire (32),
fournir le module intérieur (40) comprenant une couche ou un revêtement barrière aux gaz (44c, 46), qui est une deuxième couche ou un deuxième revêtement barrière de migration homogène configuré(e) pour empêcher la migration de contaminants d'huile minérale,
et
stratification du module extérieur (30) solide et du module intérieur (40) sur le module central (20) de sorte que la première couche ou le premier revêtement barrière de migration (34) soit disposé(e) entre la couche de masse primaire (22) et la couche support secondaire (32).

2. Procédé selon la revendication 1, dans lequel le matériau non vierge est composé jusqu'à 100 % en masse de matériau recyclé, le reste, c'est-à-dire le reste du matériau, étant un matériau non recyclé.

3. Procédé selon l'une quelconque des revendications précédentes, dans lequel la couche de masse primaire (22) est composée d'un matériau non vierge et dans lequel la couche support secondaire (32) est composée d'un matériau vierge.

4. Procédé selon l'une quelconque des revendications précédentes, dans lequel la fourniture du module extérieur (30) solide est effectuée en appliquant la couche ou le revêtement barrière (34) sur les deux côtés de la couche support secondaire (32).

5. Procédé selon l'une quelconque des revendications précédentes, comprenant en outre la fourniture du module intérieur (40) solide comprenant une troisième couche support (42) de papier ou de carton ou d'un autre matériau à base de cellulose, et une deuxième couche ou un deuxième revêtement barrière de migration (46) configuré(e) pour empêcher la migration de contaminants d'huile minérale sur au moins un côté de la troisième couche support (42).

6. Procédé selon la revendication 5, dans lequel la fourniture du module intérieur (40) solide comprend l'étape supplémentaire d'application de la seconde couche ou du deuxième revêtement barrière de migration (46) pour former une couche ou un revêtement homogène sur la troisième couche support (42).

7. Procédé selon la revendication 5 ou 6, dans lequel l'application de la seconde couche ou du deuxième revêtement barrière de migration (46) est effectuée directement sur la troisième couche support (42) ou sur un substrat de film polymère intermédiaire (44a-b).

8. Procédé selon l'une quelconque des revendications 5 à 7, dans lequel l'application de la seconde couche ou du deuxième revêtement barrière de migration (46) est effectuée par revêtement de dispersion ou solution aqueuse et séchage ultérieur.

9. Procédé selon l'une quelconque des revendications 5 à 8, dans lequel la stratification du module intérieur (40) sur le module central (20) est effectuée de telle sorte que la seconde couche ou le deuxième revêtement barrière de migration (46) soit agencé(e) entre la troisième couche support (42) et la couche de masse primaire (22).

10. Procédé selon l'une quelconque des revendications 5 à 9, dans lequel les première et deuxième couches ou les premier et deuxième revêtements barrière de migration (34, 44) comprennent une ou plusieurs matières du groupe suivant : copolymères éthylène-alcool vinylique (EVOH), copolymères polyéthylène-alcool vinylique (PVOH), cellulose nanocristalline (NCC) et cellulose microfibrillée (MFC).

11. Procédé selon l'une quelconque des revendications précédentes, dans lequel la stratification du module extérieur (30) et du module intérieur (40) sur le module central (20) est effectuée par stratification par extrusion ou stratification humide.

12. Récipient d'emballage (2), préparé au moins partiellement par un matériau d'emballage stratifié (10) produit par le procédé selon l'une quelconque des revendications précédentes.
